# EUROPEAN PATENT APPLICATION

(11) **EP 1 826 672 A2**
(43) Date of publication of application: **29.08.2007**
(21) Application number: 07102946.6
(22) Date of filing: 23.02.2007
(51) Int. Cl.: G06F 9/50

(54) **Apparatus and method for managing resources in a multiple application environment**

(30) Priority: 24.02.2006 KR 20060018282
(71) Applicant: Samsung Electronics Co., Ltd., Seoul 442-742 (KR)
(72) Inventor: Cho, Woong-suk, Seoul (KR)
(74) Representative: Walaski, Jan Filip

(57) **Abstract**

Provided are an apparatus and method for managing resources using virtual ID in a multiple Java application environment, and more particularly, an apparatus and method for allocating or de-allocating resources using a virtual ID in a multiple Java application environment, thereby effectively using the resource. The apparatus includes a resource managing unit requesting an operating system to allocate or de-allocate a resource when an application requests to allocate or de-allocate the resource; a virtual ID generating unit generating virtual ID corresponding to the resource allocated from the operating system; and an ID searching unit searching whether the virtual ID exists when the application requests to de-allocate the resource using the virtual ID.

## Description

The present invention relates to an apparatus and method for managing resources in a multiple application environment, particularly using a virtual identifier (ID) in a multiple Java application environment, and more particularly, to an apparatus and method for managing resources using a virtual ID in a multiple Java application environment that allocates or de-allocates resources using the virtual ID in the multiple Java application environment, thereby effectively using the resources.

Java is an object oriented programming language that is platform independent. Here, the platform refers to a hardware environment in which a program is executed or a software environment such as an operating system. A Java code is compiled into a Java byte code by a Java compiler, and the Java byte code is executed by a Java virtual machine which supports a variety of platforms.

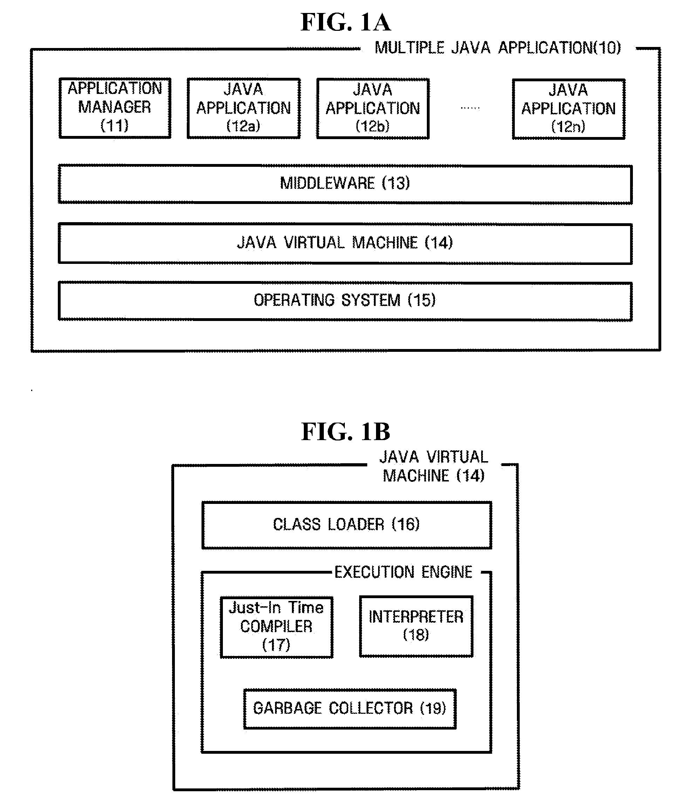

FIG. 1A is a block diagram illustrating the configuration of a multiple Java application according to the related art. FIG. 1B is a block diagram illustrating the configuration of a JAVA virtual machine.

As shown in FIG. 1A, a multiple Java application 10 includes an application manager 11, applications 12a, 12b, ..., 12n, middleware 13, a Java virtual machine 14, and an operating system 15. The applications include Java applications 12a, 12b, ..., 12n.

The application manager 11 changes the states of the applications to manage the life cycle of the applications. For example, the application manager 11 manages the operation of the applications through the middleware 13, such as OCAP (open cable application platform) or ACAP (advanced open cable application platform).

The Java virtual machine 14 includes a memory having a class included in the applications stored therein, changes an execution code of the class into a command code of the operating system 15, and manages resources allocated to the applications.

As shown in FIG. 1B, the Java virtual machine 14 includes a class loader 16 for loading the class, a just-in-time compiler 17, an interpreter 18, and a garbage collector (GC) 19 for managing resources at the execution time.

The interpreter 18 is a component for executing the execution code of the class, and serves to recognize virtual machine commands and to execute the commands. The just-in-time compiler 17 converts the virtual machine commands into a machine language for a CPU while executing the class, and thus functions to improve a processing speed.

The garbage collector 19 finds out a garbage object (an object not using a resource), returns a heap resource used by the garbage object to the operating system, and allows the heap resource to be used for another application.

That is, the garbage collector 19 manages resources in the Java platform, and also manages the allocation or de-allocation of the resource of the corresponding object according to whether the object is referred to. However, in a case in which a plurality of applications are executed in the multiple Java application having a life cycle, when a process of de-allocating resources is not normally performed in the application, the garbage collector 19 cannot perform the de-allocation of resources since it cannot check whether the object is actually alive, even when the application is closed.

Next, the direct allocation or de-allocation of resources by an application will be described below. First, when an application uses a resource, a request to allocate or de-allocate the resource is directly transmitted to the operating system 15 through the Java virtual machine 14. When the allocation of the resource succeeds, the application can immediately use the resource. When the allocation or de-allocation of the resource from the operating system fails, the process is ended.

Meanwhile, unlike the case in which the application directly de-allocates the resource, when the application does not de-allocate the resource, the resource is deallocated by the garbage collector 19 and a finalizer at the time when an object is collected.

That is, when garbage collecting starts, the garbage collector 19 checks whether all objects are referred to and examines the objects that have not been referred to. At that time, the garbage collector finds out the objects declared by the finalizer among the objects that have not been referred to.

Then, the garbage collector 19 performs the finalization of all the objects declared by the finalizer and examines non-referred objects that can be additionally generated by the finalization again. Then, the garbage collector 19 releases the objects that have not been referred to, and the operation of the garbage collector 19 is terminated.

However, when the Java application does not explicitly collect the resources, the resources used are collected by only the garbage collector 19. Therefore, when the garbage collector 19 does not operate after the application is shut down, the application whose operation has been completed occupies reusable resources, which makes it difficult for other applications to use the resources.

Next, an example of the management of resources by the resource management interface according to the related art will be described below.

First, when an application is terminated, the application manager 11 requests the resource management interface to de-allocate the resource of a corresponding application, and then the resource management interface de-allocates the resource of the corresponding application.

At that time, the resource used by each application is maintained and used by each object. Therefore, in general, the resource management interface has information on the objects having resources and applications including the objects, calls the resources included in the objects of the corresponding application when the application is terminated, and returns the resources to the system.

However, when resources are de-allocated through objects, a native resource should be de-allocated by a method, such as Java Native Interface (JNI). In the case of Java, which is a stack machine, a new stack should pile up, which may result in a low performance. However, in order to prevent the deterioration of the performance, when the resource management interface maintains only the ID of the application and the resources other than the objects, information on the objects remains in the resource management interface even after the resource management interface de-allocates the resources.

When the resource management interface manages only the ID of the application and the resources of the corresponding application are forcibly returned to the operating system at the same time when the application is terminated, the operating system allocates the returned resources so that other applications can use the resources.

At that time, when the garbage collector and the finalizer operate to de-allocate the resources stored in the objects again, errors may occur in the application using the resources that have been reused.

Japanese Unexamined Patent Application Publication No. 2002-259146 discloses an application executing apparatus including one or more library units for providing resources to applications and kernels. In the application executing apparatus, the kernel includes a unit for, when an application is terminated, notifying each library unit for providing the resource of the state of the terminated application, and each library unit includes a collecting unit for collecting the resource supplied to the terminated application that is notified by the notifying unit. In the application executing apparatus, when an application is terminated, the library unit collects an unnecessary resource. However, Japanese Unexamined Patent Application Publication No. 2002-259146 does not disclose a technique for allocating or de-allocating resources using a virtual ID.

An aspect of the invention is to provide a technique for allocating or de-allocating resources using a virtual ID in a multiple Java application environment, thereby effectively using the resources.

Other aspects of the invention not described herein will become clear to those skilled in the art upon review of the following description.

According to an aspect of the invention, there is provided an apparatus for managing resources using a virtual ID in a multiple Java application environment. The apparatus includes: a resource managing unit requesting an operating system to allocate or de-allocate a resource when an application requests to allocate or de-allocate the resource; a virtual ID generating unit generating a virtual ID corresponding to the resource allocated from the operating system; and an ID searching unit searching whether the virtual ID exists when the application requests to de-allocate the resource using the virtual ID.

According to another aspect of the invention, there is provided a method of managing resources using a virtual ID in a multiple Java application environment. The method includes: when an application requests to allocate a resource, requesting an operating system to allocate the resource in response to the request; generating the virtual ID corresponding to the allocated resource; making a table including an application ID transmitted from the application, the generated virtual ID, and the allocated resource; and transmitting the virtual ID and the allocated resource to the application.

According to still another aspect of the invention, there is provided a method of managing resources using a virtual ID in a multiple Java application environment. The method includes: when an application requests to de-allocate a resource using the virtual ID, searching whether a table including the virtual ID transmitted from the application exists; when it is determined that the table including the transmitted virtual ID exists, requesting an operating system to de-allocate a resource corresponding to the virtual ID; and when the resource is de-allocated, deleting the table including the virtual ID.

The above and other aspects of the present invention will become more apparent by describing in detail exemplary embodiments thereof with reference to the attached drawings, in which:
FIG. 1A is a block diagram illustrating the structure of a multiple Java application according to the related art;
FIG. 1B is a block diagram illustrating the configuration of a JAVA virtual machine;
FIG. 2 is a diagram illustrating an example of the use of a resource by an application in an apparatus for managing resources using a virtual ID in a multiple Java application environment according to an exemplary embodiment of the invention;
FIG. 3 is a block diagram illustrating the configuration of a multiple Java application environment according to another exemplary embodiment of the invention;
FIG. 4 is a block diagram illustrating the internal structure of an apparatus for managing resources using a virtual ID in a multiple Java application environment according to still another exemplary embodiment of the invention;
FIG. 5 is a diagram illustrating an example of a table managed by an apparatus for managing resources using a virtual ID in a multiple Java application environment according to yet another exemplary embodiment of the invention;
FIG. 6 is a flow chart illustrating a process of allocating a resource in a method of managing resources using a virtual ID in a multiple Java application environment according to yet another exemplary embodiment of the invention;
FIG. 7A is a flow chart illustrating a process of de-allocating a resource in a method of managing resources using virtual ID in a multiple Java application environment according to yet another exemplary embodiment of the invention;
FIG. 7B is a flow chart illustrating a process of de-allocating a resource performed by the resource management interface when a garbage collector requests to de-allocate the resource according to an exemplary embodiment of the invention;
FIG. 8 is a flow chart illustrating a process of de-allocating all resources in a method of managing resources using a virtual ID in a multiple Java application environment according to yet another exemplary embodiment of the invention; and
FIG. 9 is a diagram illustrating the operation of an application, a resource management interface, and an operating system that allocate or de-allocate resources in a multiple Java application environment according to yet another exemplary embodiment of the invention.

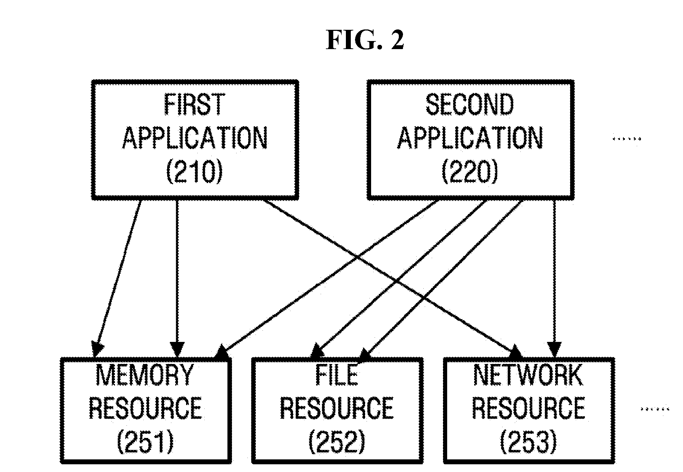

FIG. 2 is a diagram illustrating an example of the use of resources by applications in an apparatus for managing the resources using a virtual identifier (ID) in a multiple Java application environment according to an exemplary embodiment of the invention.

The apparatus for managing the resources using a virtual ID in the multiple Java application environment can use resources using one or more applications 210 and 220. The applications 210 and 220 may be Java applications in the multiple Java application environment having a life cycle. For example, the applications 210 and 220 may be an Xlet, a middlelet, and an applet.

The resources used by the applications 210 and 220 may be at least one of a memory resource 251, a file resource 252, and a network resource 253.

As shown in FIG. 2, the first application 210 uses two memory resources 251 and one network resource 253, and the second application 220 uses one memory resource 251, two file resources 252, and one network resource 253.

That is, each of the applications 210 and 220 can use a plurality of different resources at the same time, or it may use a plurality of similar resources. In addition, two different applications may use the same resource.

The applications may be generated or deleted whenever necessary. When the resource occupied by a specific application is not de-allocated by the destruction of the corresponding application, the next application may not use the resource.

Therefore, the apparatus for managing resources using a virtual ID according to an exemplary embodiment of the invention manages information on whether to use or de-allocate the resource allocated to each application using the virtual ID (VID) and immediately de-allocates the resource when receiving a request to de-allocate the resource from the application, thereby allowing another application to reuse the corresponding resource.

For example, in a case in which the apparatus for managing resources using a virtual ID operates in the Java environment, when a predetermined application requests to allocate a resource, an operating system allocates a resource to the apparatus, and the apparatus generates the virtual ID. Then, the apparatus stores the generated virtual ID and the allocated resource in a table and transmits the resource and the generated virtual ID to the corresponding application.

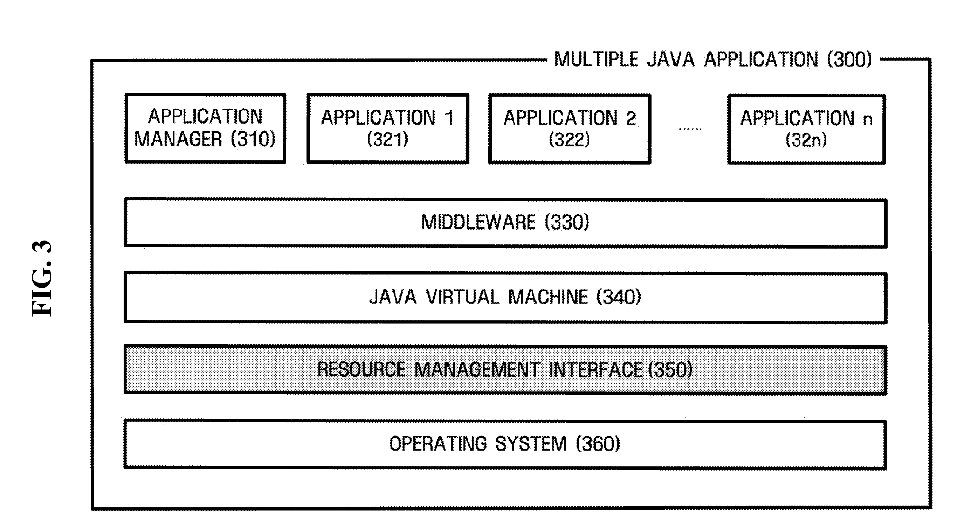

When an application de-allocates the resource, the apparatus requests to de-allocate the resource to the operating system, and deletes the table having the virtual ID corresponding to the resource stored therein, thereby allowing another application to reuse the resource. Hereinafter, a multiple Java application environment will be described below with reference to FIG. 3.

FIG. 3 is a block diagram illustrating the structure of a multi Java application environment according to another exemplary embodiment of the invention.
A multiple Java application 300 includes an application manager 310, applications 321, 322, ..., 32n, middleware 330, a Java virtual machine 340, a resource management interface 350, and an operating system 360. The applications include a Java application.

The application manager 310 changes the state of an application to manage the life cycle of the application. The application manager 310 can manage the operation of the application through the middleware 330, such as OCAP (open cable application platform) or ACAP (advanced open cable application platform).

The Java virtual machine 340 has a class included in an application that is stored in a memory, and changes an execution code of the class into a command code of the operating system 360.

The Java virtual machine 340 generates a unique ID of an application existing in the multiple Java application 300. An application ID generating unit can generate an application ID using a thread ID of the application.

The resource management interface 350 performs the allocation and de-allocation of resources on the multiple Java application 300 having a life cycle.

For example, when receiving a request to allocate a resource from a predetermined application, the resource management interface 350 requests the operating system 360 to allocate resources. Then, the resource management interface 350 generates a virtual ID corresponding to the allocated resource, and records the application ID transmitted from the application that requests to allocate resources, the virtual ID, and the resource allocated from the operating system 360 on a table and stores the table.

Next, the resource management interface 350 transmits the resource allocated from the corresponding application and the generated virtual ID.

Then, when a predetermined application requests to de-allocate the resource by using the virtual ID, the resource management interface 350 requests the operating system 360 to de-allocate the resource corresponding to the transmitted virtual ID and deletes the table including the virtual ID.

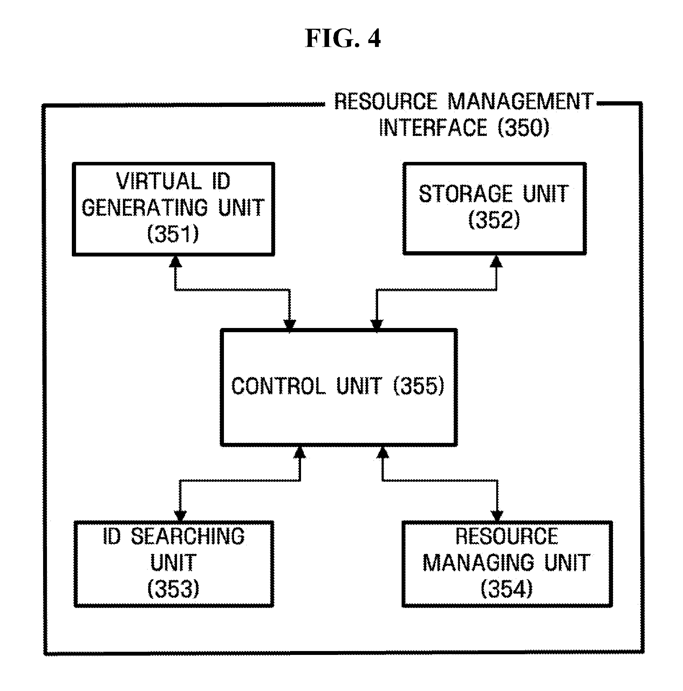

The resource management interface 350 may be separately provided in the multiple Java application 300, or it may be provided in the Java virtual machine 340. In this embodiment, the resource management interface 350 is separately provided in the multiple Java application 300. The resource management interface 350 will be described below with reference to FIG. 4.

FIG. 4 is a block diagram illustrating the internal structure of an apparatus for managing resources using a virtual ID in a multiple Java application environment according to another exemplary embodiment of the invention.

As shown in FIG. 4, the resource management interface 350 includes a virtual ID generating unit 351, a storage unit 352, an ID searching unit 353, a resource managing unit 354, and a control unit 355.

The term "unit," as used herein, means, but is not limited to, a software or hardware component, such as a Field Programmable Gate Array (FPGA) or an Application Specific Integrated Circuit (ASIC), which performs certain tasks. A unit may advantageously be configured to reside on the addressable storage medium and configured to be executed on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units. In addition, elements and units may be implemented to be executed on one or more CPUs within a device or to reside on a secure multimedia card.

When allocating a resource to a predetermined application, the virtual ID generating unit 351 generates a unique virtual ID (VID) given to the corresponding resource. The virtual ID is generated to correspond to the resource allocated to a resource management interface 350 by the operating system 360, that is, the unique ID is generated whenever resources are allocated. The resource may include at least one of a memory resource, a file resource, and a network resource. That is, an application can use at least one of the memory resource, the file resource, and the network resource, or it may use a plurality of similar resources. The application may be a Java application in a containment framework environment having a life cycle, such as an Xlet, a middlelet, or an applet.

For example, when a predetermined application requests to allocate a resource, the operating system 360 allocates the resource to the virtual ID generating unit 351, and the virtual ID generating unit 351 generates a virtual ID corresponding to the allocated resource.

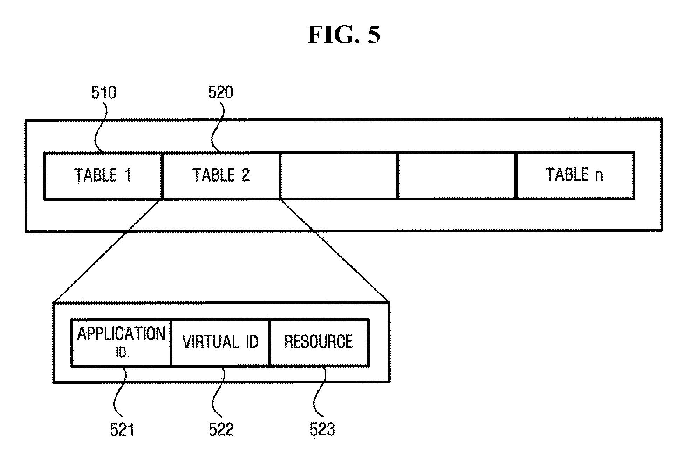

The storage unit 352 stores a table written to correspond to the application ID and the virtual ID generated by the virtual ID generating unit 351, the resource allocated from the operating system 360, the application ID transmitted through the application. The table stored in the storage unit 351 may be updated by the allocation and de-allocation of the resource. Next, the table stored in the storage unit 352 will be described below with reference to FIG. 5.

The storage unit 352 is a module capable of inputting/outputting information, such as a hard disk, a flash memory, a CF card (compact flash card), an SD card (secure digital card), an SM card (smart media card), an MMC card (multimedia card), or a memory stick.

When an application or a garbage collector uses a virtual ID (or application ID) to request to de-allocate the resource, the ID searching unit 353 searches whether the transmitted virtual ID (or application ID) exists in the table stored in the storage unit 352.

For example, when an application or a garbage collector uses a virtual ID to de-allocate a predetermined resource, the ID searching unit 353 searches the table including the transmitted virtual ID.

When an application requests to de-allocate all resources, the ID searching unit 353 searches the table including the ID of the application that requests to de-allocate all the resources.

The resource managing unit 354 is allocated a predetermined resource from the operating system 360 at the request of the application to allocate resources.
When an application and a garbage collector request to de-allocate a predetermined resource, the resource managing unit 354 determines whether to de-allocate the resource on the basis of the search result of the ID searching unit 353.

For example, when an application and a garbage collector uses the virtual ID to request the de-allocation of a predetermined resource, the resource managing unit 354 receives information on whether the virtual ID exists from the ID searching unit 353.

At that time, as the result of the search, when the corresponding virtual ID exists, the resource managing unit 354 requests the operating system 360 to de-allocate the resource. On the other hand, when the corresponding virtual ID does not exist, the resource managing unit 354 does not request the operating system 360 to de-allocate the resource.

The control unit 355 makes a table having the application ID transmitted from the application, the virtual ID generated by the virtual ID generating unit 351, and the resource allocated through the resource managing unit 354 associated with one another. When the resource managing unit 354 de-allocates a predetermined resource, the control unit 355 deletes the table including the resource.

The control unit 355 controls the operation of the functional blocks 351 to 354 forming the resource management interface 350.

FIG. 5 is a diagram illustrating an example of a table managed by an apparatus for managing resources using a virtual ID in the multiple Java application environment according to still another exemplary embodiment of the invention.

As shown in FIG. 5, a plurality of tables 510 and 520 are stored in the storage unit 352 of the resource management interface 350, and each of the tables stores ID information 521 of an application requesting to allocate resources, virtual ID information 522, and an allocated resource 523.

For example, when an application requests the resource management interface 350 to allocate a predetermined resource, the resource managing unit 354 of the resource management interface 350 requests the operating system 360 to allocate the resource and is allocated the resource. Then, the virtual ID generating unit 351 generates a unique virtual ID for the allocated resource. The virtual ID is transmitted to the application requesting the resource.

Subsequently, the control unit 355 makes a table (for example, a table 2 (520) having the application ID 521, the virtual ID 522, and the resource recorded thereon, and stores the table in the storage unit 352.

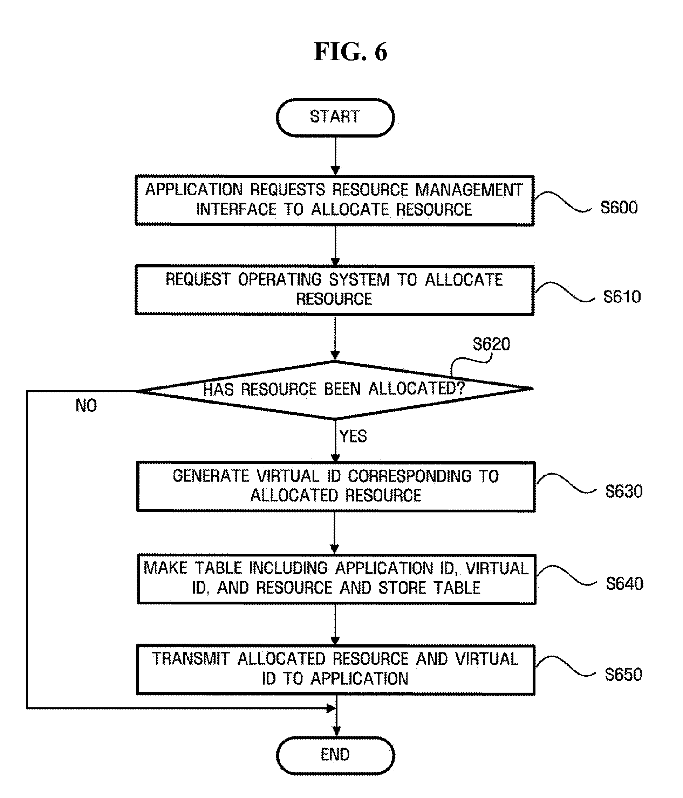

FIG. 6 is a flow chart illustrating a process of allocating a resource in a method of managing resources using a virtual ID in a multiple Java application environment according to yet another exemplary embodiment of the invention.

First, when the application 321 requests the resource management interface 350 to allocate a resource (S600), the resource managing unit 354 of the resource management interface 350 requests the operating system 360 to allocate the resource (S610). At that time, the application 321 transmits the application ID thereof together with the request.

Then, the control unit 355 determines whether the resource is allocated from the operating system 360 (S620). As a result of the determination, when the resource is allocated, the virtual ID generating unit 351 generates a unique ID corresponding to the allocated resource (S630).

Successively, the control unit 355 makes a table including the application ID, the virtual ID, and the resource allocated from the operating system 360 and stores the table in the storage unit 352 (S640).

Then, the control unit 355 transmits the allocated resource and the virtual ID corresponding thereto to the application 321 (S650).

On the other hand, when it is determined that the resource is not allocated from the operating system 360 (S620), the control unit 355 controls the resource managing unit 354 to request the allocation of the resource again, or notifies the application 321 that the allocation of the resource fails.

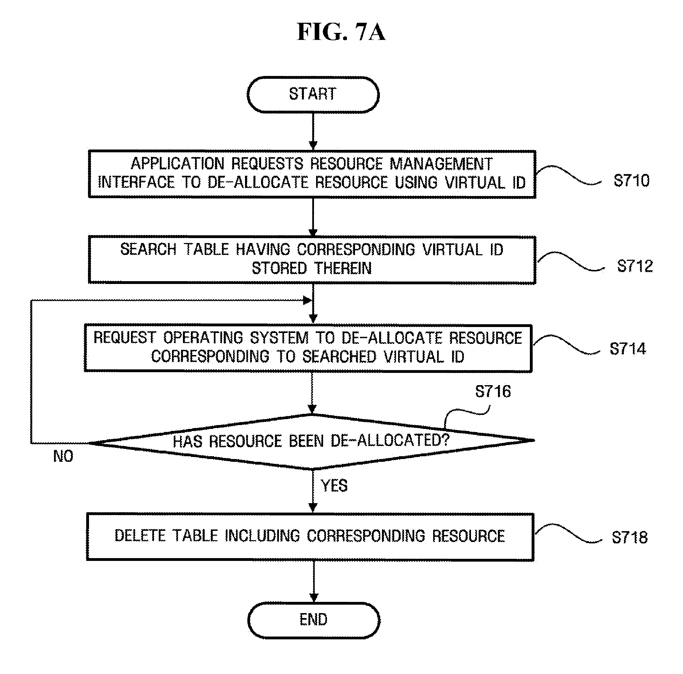

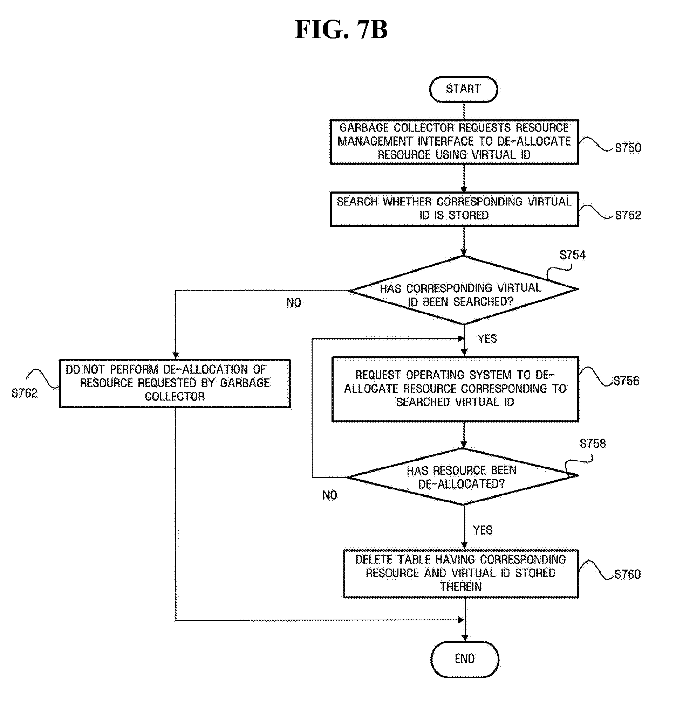

FIGS. 7A and 7B are flow charts illustrating a process of de-allocating a resource in a method of managing resources using a virtual ID in a multiple Java application environment according to still yet another exemplary embodiment of the invention. More specifically, FIG. 7A is a flow chart illustrating a process of de-allocating a resource performed by the resource management interface when an application requests to de-allocate the resource, and FIG. 7B is a flow chart illustrating a process of de-allocating a resource performed by the resource management interface when a garbage collector requests to de-allocate the resource.

The process of de-allocating a resource at the request of an application will be described below with reference to FIG. 7A.

First, when the application 321 requests the resource management interface 350 to de-allocate a resource using virtual ID (S710), the ID searching unit 353 of the resource management interface 350 searches the table including the virtual ID transmitted from the application 321 (S712). The reason why the application 321 uses the virtual ID to request the de-allocation of a resource is that, when a plurality of applications use the same resource, each application using a predetermined resource has a unique virtual ID for the resource, and when requesting to de-allocate the resource using the virtual ID, the resource management interface 350 de-allocates only the resource corresponding to the virtual ID, but does not de-allocate the resources supplied to different virtual IDs used by different applications.

Then, the resource managing unit 354 requests the operating system 360 to de-allocate the corresponding resource with reference to the table including the virtual ID searched by the ID searching unit 353 (S714).

Subsequently, the control unit 355 determines whether the resource is de-allocated (S716). When it is determined that the resource is de-allocated, the control unit 355 deletes the table having the resource stored therein from the storage unit 352 (S718).

On the other hand, when it is determined that the resource is not de-allocated (S716), the resource managing unit 354 requests the operating system 360 to de-allocate the resource again.

The process of de-allocating a resource at the request of the garbage collector will be described below with reference to FIG. 7B.

First, when the garbage collector requests the resource management interface 350 to de-allocate a resource using a virtual ID (S750), the ID searching unit 353 of the resource management interface 350 searches whether the table including the virtual ID transmitted from the garbage collector exists (S752). The reason why the garbage collector uses the virtual ID to request the de-allocation of a resource is that, when a plurality of applications use the same resource, each application using a predetermined resource has a unique virtual ID for the resource, and when requesting to de-allocate the resource using the virtual ID, the resource management interface 350 de-allocates only the resource corresponding to the virtual ID, but does not de-allocate the resources supplied to different virtual IDs used by different applications.

Then, as a result of the search, when the table including the virtual ID transmitted from the garbage collector exists (S754), the resource managing unit 354 requests the operating system 360 to de-allocate the corresponding resource with reference to the table including the virtual ID searched by the ID searching unit 353 (S756). Subsequently, the control unit 355 determines whether the resource is de-allocated (S758). When it is determined that the resource is de-allocated, the control unit 355 deletes the table having the resource stored therein from the storage unit 352 (S760).

On the other hand, when it is determined that the resource is not de-allocated (S758), the resource managing unit 354 requests the operating system 360 to de-allocate the resource again.

As the result of the search, when the table including the virtual ID transmitted from the garbage collector does not exist (S754), the control unit 355 determines that the garbage collector requests to de-allocate are source that has already been de-allocated, and does not perform the request of the garbage collector (S762).

Therefore, the resource management interface 350 does not de-allocate the resource that has already been de-allocated using the virtual ID, thereby preventing the applications using the same resource from being abnormally operated.

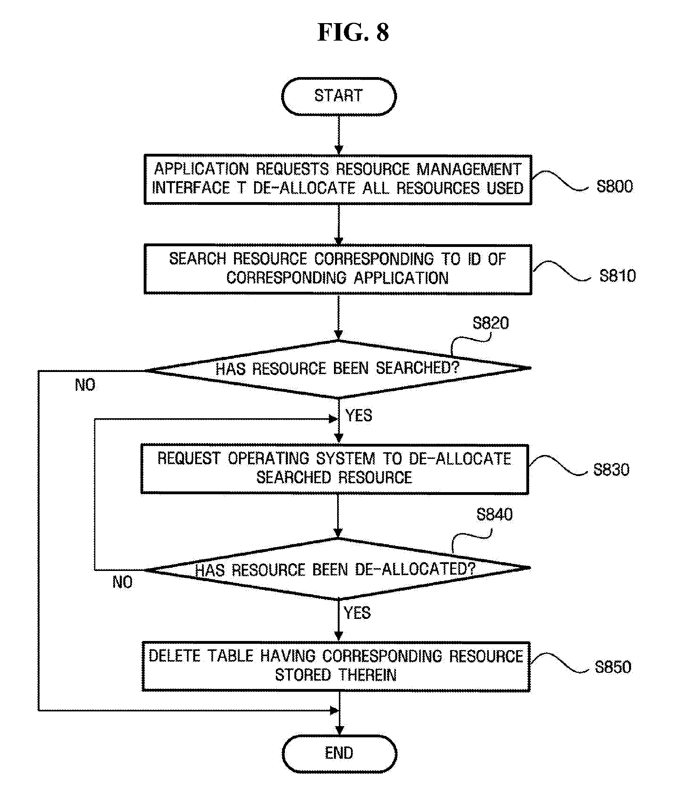

FIG. 8 is a flow chart illustrating a process of de-allocating all resources in a method of managing resources using a virtual ID in a multiple Java application environment according to still yet another exemplary embodiment of the invention. First, the application 321 requests the resource management interface 350 to de-allocate all the resources used (S800). At that time, the application 321 transmits the application ID thereof together with the request.

Then, the ID searching unit 353 of the resource management interface 350 searches the table including the ID of the application requesting the de-allocation of the resource (S810).

As a result of the search, when the ID of the application exists in the table (S820), the resource managing unit 354 requests the operating system 360 to de-allocate the resource corresponding to the application ID with reference to the searched table (S830).

Then, the control unit 355 determines whether the resource is de-allocated (S840). When it is determined that the resource is de-allocated, the control unit 355 deletes the table having the resource stored therein from the storage unit 352 (S850).
On the other hand, when it is determined that the resource is not de-allocated (S840), the resource managing unit 354 requests the operating system 360 to de-allocate the resource again.

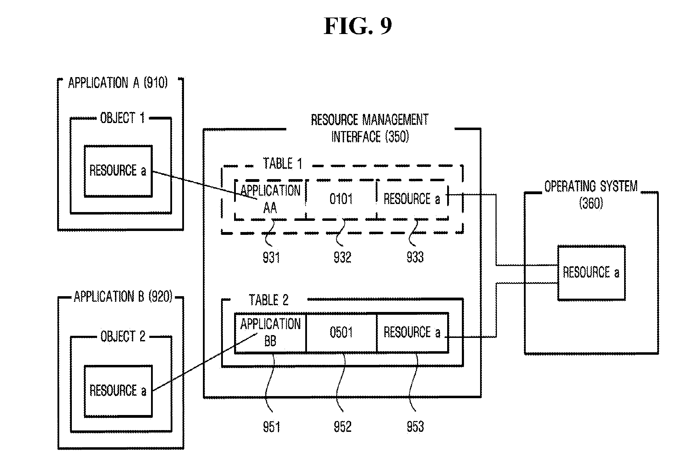

FIG. 9 is a diagram illustrating the operation of applications, a resource management interface, and an operating system that perform the allocation and de-allocation of resource in a multiple Java application environment according to yet still another exemplary embodiment of the invention.

When an application A (910) requests the resource management interface 350 to allocate a resource, the resource management interface 350 requests the operating system 360 to allocate the resource. At that time, the application 910 transmits the application ID thereof together with the request.

Then, when the resource management interface 350 is allocated a resource a from the operating system 360, the resource management interface 350 makes a table (for example, table 1) including ID 931 of an application requesting the resource (for example, an application AA), virtual ID 932 corresponding to the allocated resource "a" (for example, 0101), and the allocated resource a (933) and stores the table. Subsequently, the resource management interface 350 transmits the virtual ID (for example, 0101) 932 and the resource a (933) to the application A (910).

Next, the application A (910) requests the resource management interface 350 to de-allocate the resource using the virtual ID (for example, 0101) 932. Then, the resource management interface 350 searches the table including the transmitted virtual ID (for example, 0101) 932.

As a result of the search, when the table (for example, table 1) including the transmitted virtual ID (for example, 0101) 932 exists, the resource management interface 350 requests the operating system 360 to de-allocate the resource corresponding to the transmitted virtual ID.

Then, the resource management interface 350 deletes the table (for example, table 1) including the transmitted virtual ID (for example, 0101) 932.

Meanwhile, when an application B (920) requests the resource management interface 350 to allocate a resource, the resource management interface 350 requests the operating system 360 to allocate the resource.

Then, the operating system 360 allocates to the resource management interface 350 the resource a that has already been de-allocated.

Subsequently, the resource management interface 350 makes a table (for example, table 2) including ID 951 of an application requesting the resource (for example, an application BB), virtual ID 952 corresponding to the allocated resource a (for example, 0501), and the allocated resource a (953) and stores the table.

Then, the resource management interface 350 transmits the virtual ID (for example, 0501) 952 and the resource a (953) to the application B (920).

Thereafter, when a garbage collector requests the resource management interface 350 to de-allocate the resource using the virtual ID (for example, 0101), the resource management interface 350 determines whether the table including the transmitted virtual ID (for example, 0101) exists.

When it is determined that the table including the virtual ID (for example, 0101) does not exist, the resource management interface 350 determines that the garbage collector has requested to de-allocate the resource that has already been de-allocated, and the resource management interface 350 does not perform the request of the garbage collector.

As a result, the resource management interface 350 does not de-allocate the resource "a" corresponding to the virtual ID (for example, 0101) that has already been de-allocated, and does not de-allocate the resource a used by the application B, which prevents programs of the application B from being abnormally executed.

While the exemplary embodiments of the invention have been described above with reference to the accompanying drawings, it will be understood by those skilled in the art that various modifications and changes can be made without departing from the scope of the invention as defined by the appended claims.

As described above, the apparatus and method for managing resources using a virtual ID in the multiple Java application environment according to exemplary embodiments of the invention can obtain the following effects.

It is possible to prevent repeatedly performing the de-allocation of a resource by performing the allocation and de-allocation of the resource using a virtual ID in the multiple Java application environment.

It is possible to rapidly reuse a resource even when resources are insufficient by de-allocating only the resource used, not objects, when an application is closed in the multiple Java application environment.

## Claims

1. An apparatus for managing resources in a multiple application environment, the apparatus comprising:
a resource managing unit for requesting an operating system to allocate a resource in response to a request from an application;
a virtual identifier ID generating unit for generating a virtual ID corresponding to the resource allocated from the operating system.

2. The apparatus of claim 1, wherein the resource managing unit is arranged to request the operating system to deallocate a resource in response to a request from an application, the request including a virtual ID, further comprising:
means for determining the resource to be deallocated based on the virtual ID.

3. The apparatus of claim 2, wherein the determining means includes an ID searching unit for searching for the virtual ID when the application requests de-allocation of the resource using the virtual ID.

4. The apparatus of claim 3, wherein, when the ID searching unit determines that the virtual ID exists, the resource managing unit is arranged to request to de-allocate a resource corresponding to the virtual ID.

5. The apparatus of any one of the preceding claims, wherein the virtual ID is a unique ID generated when the resource is allocated from the operating system.

6. The apparatus of any one of the preceding claims, further comprising:
a control unit for generating a table including an application ID transmitted from the application, the virtual ID, and the allocated resource; and
a storage unit for storing the table.

7. The apparatus of claim 6, wherein the control unit is arranged to delete the table when the allocated resource is de-allocated.

8. A method of managing resources in a multiple application environment, the method comprising:
in response to a resource allocation request from an application, requesting an operating system to allocate the resource;
generating a virtual ID corresponding to the allocated resource; and
transmitting the virtual ID to the application.

9. A method according to claim 8, further comprising generating a table including an application ID transmitted from the application, the generated virtual ID, and the allocated resource.

10. A method of managing resources in a multiple application environment, the method comprising:
in response to a resource de-allocation request from an application, the request including a virtual ID,
requesting an operating system to de-allocate a resource corresponding to the virtual ID.

11. The method of claim 10, comprising searching whether a table including the virtual ID exists; and
requesting the operating system to de-allocate the resource if the virtual ID exists.

12. The method of claim 11, comprising:
when the resource is de-allocated, deleting the table including the virtual ID.

13. The method of claim 11 or 12, wherein, when it is determined that the table including the transmitted virtual ID does not exist, the de-allocation of the resource is not performed.

14. The method of any one of claims 11, 12 or 13, wherein the table comprises an ID of the application using a predetermined resource, the virtual ID corresponding to the resource, and the allocated resource.

15. The method of any one of claims 8 to 14, wherein the virtual ID is a unique ID corresponding to the resource allocated to the application.

16. A method of managing resources in a multiple application environment, the method comprising:
in response to a request from an application to de-allocate all resources assigned to the application, the request including an application identifier ID,
requesting an operating system to de-allocate the resources corresponding to the application ID.

17. The method of claim 16, comprising searching a table that includes one or more resources associated with one or more application IDs; and
requesting the operating system to de-allocate the resources corresponding to the application ID of the application requesting the de-allocation.

18. The method of any one of claims 8 to 17, wherein the multiple application environment comprises a Java environment, and the application comprises a Java application.
